(19) Europäisches Patentamt
European Patent Office
Office européen des brevets

(11) Numéro de publication: **0 076 197 B1**

(12) **FASCICULE DE BREVET EUROPEEN**

(45) Date de publication du fascicule du brevet: **22.05.85**

(51) Int. Cl.[4]: **C 08 K 5/16**, C 08 L 21/00

(21) Numéro de dépôt: **82401694.3**

(22) Date de dépôt: **20.09.82**

(54) **Additif applicable au renforcement des polymères et notamment des élastomères avec les charges minérales.**

(30) Priorité: **30.09.81 FR 8118381**

(43) Date de publication de la demande: **06.04.83 Bulletin 83/14**

(45) Mention de la délivrance du brevet: **22.05.85 Bulletin 85/21**

(84) Etats contractants désignés: **AT BE DE FR GB IT LU NL SE**

(56) *Documents cités:* **EP - A - 0 032 076**

(73) Titulaire: **RHONE-POULENC CHIMIE DE BASE, 25, quai Paul Doumer, F-92408 Courbevoie (FR)**

(72) Inventeur: **Machurat, Jean, 8, rue Descartes, F-69250 Neuville-sur-Saône (FR)**
Inventeur: **Morawski, Jean-Claude, 10, rue des Primevères, F-69680 Chassieu (FR)**
Inventeur: **Soula, Gérard, 33, rue Nungesser, F-69330 Meyzieu (FR)**

(74) Mandataire: **Martin, Henri et al, RHONE-POULENC RECHERCHES Service Brevets Chimie et Polymères 25, quai Paul Doumer, F-92408 Courbevoie Cedex (FR)**

EP 0 076 197 B1

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

## Description

Le problème du renforcement des matières polymères par des charges minérales est complexe et difficile. L'on doit, d'une part, réaliser une bonne dispersion de la charge et, d'autre part, obtenir une bonne liaison entre cette charge et la matière polymère. De plus, ce renforcement doit être effectué de manière économique, sans entraîner d'inconvénients secondaires lors de la manipulation, tels que toxicité. Cela explique qu'un grand nombre de solutions ont été proposées, souvent spécifiques d'une charge et d'un polymère déterminés, tenant compte de divers facteurs tels que matrice du polymère, nature des liaisons chimiques possibles, chimie de surface de la charge. On fait couramment appel à des agents de couplage. Parmi ceux-ci, il y a lieu de signaler la famille des silanes et, en particulier, les mercaptosilanes. Celle-ci a été décrite dans la littérature, en particulier dans «Rubber World», octobre 1979, pp. 53-58, ou dans «European Rubber Journal», mars 1979, pp. 37-46.

Malheureusement, leur développement se heurte à deux inconvénients majeurs: d'une part, leur prix, qui, dans l'état actuel des choses, est très élevé par rapport à celui de la charge proprement dite et, d'autre part, leur odeur, qui en proscrit l'usage dès que l'on dépasse pratiquement le seuil de 1% en poids par rapport au polymère.

Dans le brevet FR-A N° 2472000 (demande française N° 79.31219), on a revendiqué un procédé pour améliorer la compatibilité des plastifiants et des charges dans les polymères selon lequel on met en œuvre des additifs à base d'alcénylsuccinimides.

Dans le brevet FR-A N° 2476666 (demande N° 80.04037 déposée le 25 février 1980), on a décrit un procédé qui revendique l'appel conjoint à un silane et à un produit selon le brevet FR-A N° 2472000.

Selon ce procédé, on obtient un résultat excellent, comparable à l'utilisation des silanes seuls, mais en faisant appel à une quantité de ces derniers suffisamment faible sans présenter de manière sensible les inconvénients qui leur sont inhérents.

On sait que les silices de précipitation très renforçantes ont l'inconvénient, contrairement au noir de carbone, de conférer aux mélanges de caoutchouc une trop grande viscosité. La principale raison de cette viscosité élevée est la solidité du réseau de silice qui se forme dans le caoutchouc (A. Voet et J.C. Morawsky, «Rubber Chem. Technical», *47*, 4, 1974 765-777).

Les travaux de la titulaire ont montré que, pour affaiblir ce réseau, il faut diminuer les interactions interparticulaires.

L'objet de la présente invention concerne un additif et son utilisation comme agent de renforcement des polymères, lequel additif contient au moins une molécule qui, d'une part, présente plus d'affinité pour la silice que les autres ingrédients du mélange de caoutchouc et, d'autre part, contient un groupement organophile suffisamment mobile pour se mélanger intimement avec les chaînes élastomériques, et permet ainsi de réduire la cohésion du réseau de silice.

Un tel additif sera, par la suite, appelé additif d'interface.

La présente invention a donc pour objet un procédé qui se caractérise par le fait que l'on introduit dans le mélange un additif d'interface.

On a trouvé que, en particulier, un tel additif d'interface peut être obtenu par l'action d'au moins une polyamine sur au moins un acide monocarboxylique, le rapport molaire polyamine/acide monocarboxylique étant inférieur à 1.

Parmi les acides carboxyliques pouvant être mis en œuvre pour préparer les différents additifs, on peut citer:

– les acides gras naturels tels que l'acide stéarique, l'acide oléique, linoléique, linolénique, ricinoléique;

– les acides carboxyliques de synthèse tels que les acides butanoïque, hexanoïque, heptanoïque, octanoïque, décanoïque, dodécanoïque, tridécanoïque, hexadécanoïque et versatique.

Les compositions selon l'invention peuvent être préparées d'une manière connue par condensation d'un acide carboxylique précédemment défini ou d'un mélange de ces acides avec une polyamine dans un rapport molaire polyamine/acide carboxylique inférieur à 1.

Lorsque l'amine mise en œuvre contient deux groupements amino, un rapport molaire compris entre 0,4 et 0,6 permet d'obtenir des compositions contenant une majeure partie de bisamides; un rapport molaire voisin de 1, de préférence compris entre 0,7 et 0,95, permet d'obtenir des compositions contenant une majeure partie de monoamides. Lorsque l'amine contient 3 groupements amino ou plus, un rapport molaire inférieur à 0,4 permet d'obtenir un trisamide ou un polyamide.

L'opération de condensation de l'acide carboxylique avec la polyamine mise en œuvre pour préparer l'amide correspondant est réalisée selon un procédé connu à une température comprise entre 80 et 200° C. Cette opération est réalisée de préférence à une température comprise entre 120 et 180° C et avec un rapport molaire inférieur à 1.

Parmi les polyamines pouvant être utilisées pour obtenir les amides, on peut citer:

I. les polyalkylénamines dont les radicaux alkylènes sont linéaires ou ramifiés et contiennent de 2 à 12 atomes de carbone, lesdites polyalkylénamines étant éventuellement substituées sur l'azote par un ou des radicaux hydroxyalcoyles ou aminoalcoyles;

II. les polyoxaalkylénamines dont les radicaux oxaalkylènes sont linéaires ou ramifiés et contiennent de 2 ou 3 atomes de carbone;

III. les amines tertiaires aminoalcoylées répondant à la formule générale:

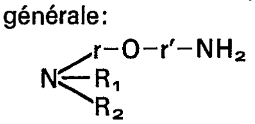

où

r représente un radical éthylène ou propylène,

r' représente un radical triméthylène ou propylène,

$R_1$ représente un radical $-r-O-r'-NH_2$ ou $-r'-NH_2$,

$R_2$ représente un radical $-r-O-r'-NH_2$ ou $-r'-NH_2$ ou -alcoyle en $C_2$-$C_4$ ou phényle.

I. Comme exemples de polyalkylénamines non substituées, on peut citer:

– les méthylénamines telles que triméthylènediamine, tétraméthylénediamine, pentaméthylènediamine, hexaméthylènediamine, heptaméthylènediamine, octaméthylènediamine, nonaméthylènediamine, décaméthylènediamine, di(triméthylène)triamine, di(hexaméthylène)triamine;

– les éthylénamines telles qu'éthylènediamine, diéthylènetriamine, triéthylènetétramine, tétraéthylènepentamine, pentaéthylènehexamine;

– les propylénamines telles que la propylènediamine, la dipropylènetriamine, la tripropylènetétramine;

– leurs homologues cycliques du type aminoalcoylpipérazines telles que 1,4-bis-(2-aminoéthyl)pipérazine, 1,4-bis-(4-aminobutyl)pipérazine.

Les éthylènepolyamines sont spécialement utiles. Elles sont décrites d'une manière assez détaillée sous le titre «Diamines and Higher Amines» dans «Encyclopaedia of Chemical Technology», 2e éd., Kirk et Othmer, vol. 7, pp. 27-39, Interscience Publishers, New York (1965). Elles peuvent être utilisées seules ou en mélange entre elles ou avec leurs homologues cycliques.

Comme exemples de polyalkylénamines substituées sur l'azote par un ou des groupes hydroxyalcoyles, on peut citer celles dont le ou les groupes hydroxyalcoyles contiennent moins de 8 atomes de carbone, telles que: N-(2-hydroxyéthyl)-éthylènediamine, N,N-bis-(2-hydroxyéthyl)-éthylènediamine, monohydroxypropyldiéthylènetriamine, dihydroxypropyltétraéthylènepentamine et N-(3-hydroxypropyl)tétraméthylènediamine.

Comme exemples de polyalkylénamines substituées sur l'azote par un ou des groupes aminoalcoyles, on peut citer celles dont le ou les groupes aminoalcoyles contiennent moins de 4 atomes de carbone, telles que: la tris-(2-aminoéthyl)amine, la N-(2-aminoéthyl)tétraéthylènepentamine, la N,N,N'-tris-(3-aminopropyl)éthylènediamine, la N,N,N,N'-tétrakis-(3-aminopropyl)éthylènediamine et la N-(3-aminoéthyl)triméthylènediamine.

II. Comme exemples de polyoxaalkylénamines, on peut citer:

– le diamino-1,10 dioxa-4,7 décane,

– le diamino-1,13 trioxa-4,7,10 tridécane,

– le diamino-1,8 dioxa-3,6 triméthyl-1,5,8 octane,

– le tris(amino-2 méthyl-2 éthoxy)-1,2,3 propane.

D'autres exemples de polyoxaalkylénamines pouvant être utilisées sont décrits dans le brevet FR-A No 1547228.

III. Comme exemples d'amines tertiaires aminoalcoylées pouvant être utilisées, on peut citer celles décrites dans le brevet FR-A No 2307795 (demande française No 75.39690) et, en particulier:

– la tris(oxa-3 amino-6 hexyl)amine,

– la N-éthylbis(oxa-3 amino-6 hexyl)amine.

Les additifs selon l'invention peuvent être mis en œuvre simultanément avec des silanes. Avantageusement, on peut remplacer partiellement les silanes par des additifs d'interface selon l'invention. On observe alors un effet de synergie remarquable dans le cas notamment des caoutchoucs synthétiques.

Les silanes selon l'invention répondent à la formule générale:

$$R'-Si(OR)_3$$

dans laquelle R' est un groupe organique réactif tel que mercapto ou azo, généralement relié par une courte chaîne alkylène à l'atome de silicium, et OR est un groupe alcoxy hydrolysable.

Les silanes selon l'invention sont notamment des silanes soufrés du type γ-mercaptopropyltriméthoxysilane ou bis-(3 triéthoxysilylpropyl)-tétrasulfure.

Mais on peut aussi faire appel à des silanes dont le groupe réactif est un carbamoylazoformate.

On peut encore citer, à titre d'exemple, les formules suivantes:

– tétrasulfure de di(méthylpropyldiéthoxysilane),

– hexaméthylcyclotrisilthiane,

– polysulfure d'éthyltriéthoxysilane,

– monosulfure de diméthylpropyléthoxysilane.

Les agents d'interface selon l'invention peuvent être apportés soit sous forme pure, soit sous forme diluée, c'est-à-dire prémélangés à un support absorbant dans des proportions qui permettent d'obtenir un produit facilement manipulable sous forme pulvérulente ou de granulés. Généralement, il faut au moins 30 parties de silice pour 70 parties de produit actif.

Les charges ou matières renforçantes selon l'invention peuvent être constituées par une charge minérale, naturelle ou synthétique.

Plus particulièrement, la présente invention s'adresse aux silices précipitées.

Celles-ci peuvent être obtenues par diverses familles de procédés.

Selon une première famille, on ajoute un agent d'acidification, tel que l'anhydride carbonique ou un acide minéral, à une solution aqueuse de silicate, on fait un arrêt après l'apparition de l'opalescence et on observe un temps de mûrissement avant de reprendre l'acidification du milieu, par exemple dans les procédés décrits dans les brevets FR-A No 2208950 ou US-A No 3503797.

Selon une seconde famille, on réalise la première interruption d'acide au-delà du point d'opalescence, entre l'opalescence et le gel, comme dans le brevet FR-A No 2159580.

Enfin, on peut ne pas provoquer d'arrêt et réaliser une addition simultanée d'une solution de silicate alcalin et d'une solution d'acide dans une solution de silicate, par exemple dans le brevet FR-A No 1352354.

Bien évidemment, il existe de nombreuses variantes possibles de ces procédés qui permettent de contrôler les caractéristiques des silices, et la précédente énumération n'est pas du tout limitative du type de silice que l'on peut mettre en œuvre dans le cadre de la présente invention.

Les silices selon l'invention peuvent être utilisées seules ou avec d'autres charges. En particulier, on peut mettre en œuvre des formulations qui, pour 100 parties en poids de caoutchouc, et notamment de caoutchouc naturel, renferment de 10 à 60 parties en poids de silice, de 10 à 60 parties de noir de carbone et de 1 à 20% par rapport à la silice d'un additif selon l'invention.

Les matières polymères sont notamment constituées par des matériaux polymères tels que caoutchouc naturel ou synthétique, mais peuvent aussi être constituées par des polymères synthétiques tels que polyamides ou polyesters.

*Exemples:*

Les produits mis en œuvre dans les exemples suivants sont:

*Silane:* γ-mercaptopropyltriméthoxysilane commercialisé par Union Carbide sous la dénomination A 189.

*Produit No 1*

Dans un ballon tétracol de 2 l équipé d'un agitateur mécanique, d'un thermomètre, d'une ampoule à brome et d'un Dean Stark, on introduit successivement 356 g d'acide stéarique (1,25 mol) et 125 ml de xylène. Le mélange est chauffé à reflux, puis on introduit 189 g de tétraéthylènepentamine (1 mol) en solution dans 125 ml de xylène au moyen de l'ampoule à brome, en 45 min. L'eau de la réaction est distillée et séparée au moyen du Dean Stark au fur et à mesure de sa formation. Lorsque toute l'eau a été éliminée, on maintient en reflux pendant 1 h, puis on refroidit à 100° C. Le mélange est alors filtré sur clarcel et le xylène évaporé à 140° C sous 3000 Pa. On obtient un produit solide à froid correspondant essentiellement à un alkylamide et également à une alkylimidazoline (structure déterminée par infrarouge et résonance magnétique nucléaire). L'analyse élémentaire indique:

| | Théorie (%) | Trouvé (%) |
|---|---|---|
| Azote total | 13,4 | 12,4 |
| Indice d'acide | 0 | 7 mg KOH/g |

*Produit No 2 – Condensation de la tétraéthylènepentamine avec l'acide linoléique*

On charge, dans le réacteur, 200 ml de xylène et 302,4 g de tétraéthylènepentamine (1,6 mol). Le mélange est agité et chauffé à ébullition. On ajoute alors en 1 h une solution contenant 200 ml de xylène et 559 g d'acide linoléique (2 mol). L'eau formée au cours de la réaction est éliminée par entraînement azéotropique. En fin d'addition, le xylène est distillé sous pression réduite (13 500 Pa). Le produit obtenu est filtré sur clarcel puis analysé. On note par analyse en spectrographie infrarouge que le mélange est composé d'amides et d'imidazolines. L'analyse chimique est la suivante:

| | Théorie (%) | Trouvé (%) |
|---|---|---|
| Azote total | 15,49 | 12,80 |
| Indice d'acide | 0 | 35,8 mg KOH/g |

*Produit No 3* (de référence selon le brevet FR-A No 2472000)

Dans un ballon tricol de 2 l équipé d'un agitateur mécanique, d'une ampoule à brome, d'un thermomètre et d'une tête de distillation suivie d'un condenseur et d'un récepteur, on verse 665 g d'anhydride tétrapropénylsuccinique (2,5 mol) que l'on chauffe à 130° C.

On introduit alors en 30 min 189 g de tétraéthylènepentamine (2 mol). Le mélange est porté à 160° C sous 3350 Pa de pression. Lorsque toute l'eau formée au cours de la réaction a distillé (3 h), le mélange est refroidi.

L'analyse d'azote est la suivante:
théorie = 14%
mesuré = 13,8%

*Produit No 4 – Condensation de la tétraéthylènepentamine avec l'acide oléique*

On charge dans le réacteur 250 ml de xylène et 706,5 g d'acide oléique (2,5 mol). Le mélange est agité et chauffé à ébullition. On ajoute alors en 1 h une solution contenant 378 g de tétraéthylènepentamine (2 mol) et 250 ml de xylène. L'eau formée au cours de la réaction est éliminée par entraînement azéotropique. En fin d'addition, le xylène est distillé sous pression réduite (p = 13 500 Pa). Le produit obtenu est filtré sur clarcel puis analysé.

L'analyse d'azote est la suivante:
théorie = 15,42%
mesuré = 12,73%

*Produit No 5 – Condensation de la tétraéthylènepentamine avec l'acide linoléique*

On charge dans le réacteur 250 ml de xylène et 378 g de tétraéthylènepentamine (2 mol). Le mélange est agité et chauffé à ébullition. On ajoute alors en 1 h une solution contenant 250 ml de xylène et 695,5 g d'acide linoléique (2,5 mol). L'eau formée au cours de la réaction est éliminée par entraînement azéotropique. En fin d'addition, le xylène est évaporé sous pression réduite (17 200 Pa). Le produit obtenu est filtré sur clarcel puis analysé.

Comme dans les exemples précédents, on note, par analyse en spectrographie infrarouge, que le mélange est composé d'amides et d'imidazolines. L'analyse chimique est la suivante:

| | Théorie (%) | Trouvé (%) |
|---|---|---|
| Azote total | 15,56 | 12,80 |
| Indice d'acide | 0 | 5,5 mg KOH/g |

*Produit Nº 6 – Condensation de la tétraéthylènepentamine avec l'acide laurique*

On charge dans le réacteur 300 ml de xylène et 453,6 g de tétraéthylènepentamine (2,4 mol). Le mélange est agité et chauffé à ébullition. On ajoute alors en 2 h une solution contenant 250 ml de xylène et 601 g d'acide laurique (3 mol). L'eau formée en cours de la réaction est éliminée par entraînement azéotropique. En fin d'addition, le xylène est distillé sous pression réduite (13 500 Pa). Le produit obtenu est filtré sur clarcel puis analysé. Comme dans les exemples précédents, on note, par analyse en spectrographie infrarouge, que le mélange est composé d'amides et d'imidazolines. L'analyse chimique est la suivante:

| | Théorie (%) | Trouvé (%) |
|---|---|---|
| Azote total | 18,835 | 15,90 |
| Indice d'acide | 0 | 9,4 mg KOH/g |

*Produit Nº 7*

Dans un réacteur tétracol de 2 l équipé d'un agitateur mécanique, d'un thermomètre, d'une ampoule à brome et d'un Dean Stark, on introduit successivement 900 g d'acide oléique (3,2 mol) et 350 g de xylène. Le mélange est agité et chauffé à ébullition. On ajoute alors en 1 h 350 g de diéthylènetriamine (3,3 mol), puis on augmente la température. A partir de 145° C, l'eau de la réaction est éliminée. On maintient la température de mélange à 168° C pendant 3 h, puis on élimine le solvant. L'amine qui n'a pas réagi et le xylène sont ainsi récupérés (quantité d'amine extraite: 69 g; eau éliminée: 116).

Teneur en azote: 6.1%.

*Silice:*

| | |
|---|---|
| – perte au feu | <12,5 |
| – pH (5 g/100 cm³) | 5 |
| – surface BET (m²/g) | 175 |
| – diamètre des particules ultimes (µm) | 20 |
| – surface CTAB (m²/g) | 175 |

La surface CTAB (surface externe) par adsorption de bromure de céthyltriméthylammonium à pH 9 est déterminée selon la méthode exposée par Jay, Jansen et G. Raus dans «Rubber Chemistry and Technology», *44* (1971), pp. 1287-1296.

Afin de mettre en évidence l'intérêt de la présente invention, on a réalisé des essais en mélange caoutchouc; la mise en œuvre a été réalisée dans un malaxeur interne Banbury de 1 l, puis reprise au malaxeur à cylindres.

Les tests suivants ont été faits:

*Tests mécaniques, statiques et dynamiques*

1. *Rhéomètre Monsanto* (ASTM D 2084)

Il mesure les propriétés rhéologiques du mélange durant la vulcanisation:

– couple minimal (cm): consistance du mélange non vulcanisé (mélange cru) à la température de l'essai;

– couple maximal (CM): consistance du mélange après réticulation;

– △ couple: CM – Cm est en relation avec le taux de réticulation;

– précocité: temps nécessaire pour démarrer la réticulation à la température de l'essai;

– indice: en relation avec la vitesse de vulcanisation (temps optimal – précocité).

– temps optimal: $X = \frac{(CM - Cm) \times 90}{100} + Cm$

couple X → Y min = temps optimal
(ordonnée) (abscisse)

Ces propriétés sont décrites en particulier dans l'«Encyclopaedia of Polymer Science and Technology», vol. 12, p. 265 (Interscience Publishers, John Wiley & Sons, Inc.).

2. *Propriétés statiques*

Elles sont mesurées selon les normes:

a) *ASTM D 412-51 T*
Résistance rupture (Pa)
Allongement (%)
Module (Pa)

b) *ASTM D 2240-75*
Dureté Shore A

c) *NF T 47-126*
Déchirement pantalon (kg/cm)

d) *DIN 53516*
Abrasion (résistance à l')

3. *Propriétés dynamiques*
*ASTM D 623-67*
Flexomètre Goodrich

Cet appareil permet de soumettre un vulcanisat à des déformations alternées et de déterminer sa tenue à la fatigue.

a) Compression statique (CS %): déflexion sous charge constante.

b) Déformation permanente (DP %): pourcentage de déformation résiduaire après essai.

c) Compression dynamique (CD %): pourcentage de déformation durant l'essai.

CDO: Compression dynamique en début d'essai.

CDF: Compression dynamique en fin d'essai.

△ CD = CDF – CDO, évolution de la compression dynamique qui est en relation avec la tenue à la fatigue.

d) △ T. base: △ T. entre la température à la surface de l'éprouvette (à sa base) et la température de la chambre.

e) △ T. cœur: △ T. entre la température au cœur de l'éprouvette et la température de la chambre.

f) Conditions des essais:

charge 106N, déflexion 22,2%, fréquence 21,4 $H_3$

température de la chambre = 50° C

*Exemple 1:*

On réalise une série d'essais en mettant en œuvre la formule suivante en parties en poids:

– Copolymères butadiène/styrène (SBR 1500) 100

– Huile aromatique (Dutrex V10)® 20
– Oxyde de zinc 4,00
– Acide stéarique 1,50
– N-isopropyl-N-phényl-N'-phényl-p-phénylènediamide
(antioxygène Permanax IPPD)® 1,50
– N-(diméthyl)-1-3 butyl-N'-phényl-p-phénylènediamine
(antioxygène Permanax 6PPD)® 1,50
– Silice 60,00
– Polyéthylèneglycol (PEG 4000) 2,40
– N-cyclohexyl-2-benzothiazolsulfénamide (Vulcafor CBS) 3,60
– Soufre 2,80

Additif selon les essais exprimés en pour-cent par rapport à la silice.

*Mise en œuvre*

*Banbury*

– SBR
– Silice (90%) + ZnO + antioxygène + acide stéarique + PEG
– Huile + silice (10%) + additif (s'il y a lieu)
– Fin du malaxage 120° C
– Calandrage sur malaxeur ouvert

*Malaxeur ouvert*

– Mélange + soufre + accélérateur
– Malaxage
– Passage au fin
– Tirage en feuille

*Résultats*

Ceux-ci sont résumés dans les tableaux I à III.

On remarque:

– sur le tableau I (rhéomètre Monsanto), que le produit selon l'invention, seul ou en combinaison avec le silane, active la vulcanisation et abaisse la viscosité du mélange;

– sur le tableau II, que le produit de l'invention, utilisé seul, ne modifie pas sensiblement les caractéristiques statiques des vulcanisats; cependant, il améliore notablement la résistance au déchirement;

utilisé en combinaison avec le silane dans le rapport de 3% du produit N° 1 sur 1% de silane, il apporte des améliorations spectaculaires et semblables à celles obtenues avec 3% de silane (sauf en résistance à l'abrasion); la résistance au déchirement est en outre améliorée avec le produit N° 1 combiné au silane;

– sur le tableau III, que le produit N° 1, employé seul, ne modifie pas les caractéristiques des vulcanisats; par contre, en combinaison avec 1% de silane, on obtient des résultats équivalents à ceux enregistrés avec 3% de silane seul; il conduit même à un échauffement inférieur.

*Exemple 2:*

On réalise une série d'essais en mettant en œuvre une formule avec un caoutchouc naturel (SMR 5L) de composition suivante:

– SMR 5L 100,00
– Huile Dutrex V10® 20,00
– Acide stéarique 1,50
– ZnO 4,00
– Antioxygène IPPD 1,50
– Antioxygène 6PPD 1,50
– Vulcafor CBS® 1,50
– Silice 60,00
– PEG 4000 3,00
– Soufre 2,80
– Additif selon les essais exprimé en pour-cent par rapport à la silice.

*Mise en œuvre*

*Banbury*

– SMR 5L
– Silice (90%) + ZnO + antioxygène + acide stéarique + PEG
– Huile + silice (10%) + additif s'il y a lieu
– Fin du malaxage 120° C
– Calandrage sur malaxeur ouvert

*Malaxeur ouvert*

– Mélange + soufre + accélérateur
– Malaxage
– Passage au fin
– Tirage en feuille

*Résultats*

a) *Rhéomètre Monsanto 150° C* (tableau IV)

La vulcanisation est accélérée avec l'additif utilisé seul ou en combinaison avec le silane.

b) *Propriétés statiques* (tableau V)

Utilisés seuls, les deux additifs améliorent le module 300% et la résistance au déchirement.

En combinaison avec 1% de silane, l'additif conduit à des caractéristiques équivalant à celles obtenues avec 3% de silane seul.

c) *Propriétés dynamiques* (Goodrich: tableau VI)

Utilisé seul, le produit permet d'améliorer toutes les caractéristiques dynamiques importantes: △ CD, △ T. cœur et base, déformation permanente.

La diminution de l'échauffement interne est très spectaculaire.

*(Tableaux en pages suivantes)*

*Exemple 3:*

On réalise une autre série d'essais avec un caoutchouc naturel en mettant en œuvre une formule de composition suivante:

– SMR 5L (NR) 100,00
– Acide stéarique 1,50
– Dutrex V10® 20,00
– Oxyde de zinc 4,00
– Antioxygène IPPD 1,50
– Antioxygène 6PPD 1,50
– Accélérateur Vulcafor CBS® 2,20
– PEG 400 1,60
– Silice 40,00
– Noir de carbone N347 20,00
– Soufre 2,50
– Additif[1] 2,00

[1] 5% par rapport à la silice.

*Tableau I*

| Essais | Additif | | | Rhéomètre Monsanto à 150° C | | | | | |
|---|---|---|---|---|---|---|---|---|---|
| | Silane A 189 (%) | Produit de l'invention (N°) | Produit de l'invention (%) | CM | Cm | △ C. | T. 90 | T + 2 | Indice |
| 1 | 0 | 1 | 0 | 102 | 19 | 83 | 20,0 | 12,5 | 7,5 |
| 2 | 3 | 1 | 0 | 99 | 11,5 | 87,5 | 15,75 | 8,25 | 7,5 |
| 3 | 0 | 1 | 3 | 92 | 13 | 79 | 16,50 | 10,3 | 6,2 |
| 4 | 1 | 1 | 3 | 96 | 11 | 85 | 12,75 | 6,75 | 6,0 |

*Tableau II*

| Essais | Additif | | | Propriétés statiques des vulcanisats | | | | | | | |
|---|---|---|---|---|---|---|---|---|---|---|---|
| | Silane A 189 (%) | Produit de l'invention (N°) | Produit de l'invention (%) | Dureté Shore A | Module 100% (MPa) | Module 300% (MPa) | Résist. rupt. (MPa) | All. (%) | Déch. Pant. (kg/cm) | Abrasion (DIN perte) | Densité |
| 1 | 0 | 1 | 0 | 66 | 2,0 | 5,1 | 13,5 | 441 | 22 | 225 | 1,19 |
| 2 | 3 | 1 | 0 | 70 | 4,1 | 13,4 | 14,9 | 337 | 11 | 141 | 1,19 |
| 3 | 0 | 1 | 3 | 66 | 1,8 | 5,1 | 14,5 | 467 | 30 | 234 | 1,19 |
| 4 | 1 | 1 | 3 | 68 | 3,3 | 13,9 | 17,2 | 352 | 35 | 162 | 1,19 |

*Tableau III*

| Essais | Additif | | | Propriétés dynamiques des vulcanisats – Flexomètre Goodrich | | | | | | |
|---|---|---|---|---|---|---|---|---|---|---|
| | Silane A 189 (%) | Produit de l'invention (N°) | Produit de l'invention (%) | C.S. (%) | CDO (%) | CDF (%) | △ CD (%) | △ T. Base (° C) | △ T. Cœur (° C) | DP (%) |
| 1 | 0 | 1 | 0 | 10,6 | 6,7 | 8,55 | 1,85 | 33 | 115,5 | 5,45 |
| 2 | 3 | 1 | 0 | 10,0 | 2,4 | 2,7 | 0,3 | 28 | 91,5 | 2,3 |
| 3 | 0 | 1 | 3 | 10,4 | 6,6 | 10,7 | 4,1 | 33 | 117,0 | 5,8 |
| 4 | 1 | 1 | 3 | 10,9 | 3,2 | 3,2 | 0 | 25 | 82 | 2,8 |

*Tableau IV*

| Essais | Additif | | | Rhéomètre Monsanto à 150° C | | | | | |
|---|---|---|---|---|---|---|---|---|---|
| | Silane A 189 (%) | Produit de l'invention (N°) | Produit de l'invention (%) | CM | Cm | △ C. | T. 90 | T + 2 | Indice |
| 5 | 0 | – | – | 83,5 | 19,0 | 64,5 | 20,5 | 10,5 | 10,0 |
| 6 | 3 | – | – | 70,0 | 14,5 | 55,5 | 10,5 | 3,25 | 7,25 |
| 7 | 0 | 2 | 3 | 84,5 | 21,0 | 63,5 | 16,0 | 6,50 | 9,50 |
| 8 | 1 | 2 | 3 | 72,0 | 17,0 | 55,0 | 13,75 | 4,00 | 9,75 |
| 9 | 0 | 1 | 3 | 83,0 | 19,0 | 64,0 | 15,30 | 6,30 | 9,00 |
| 10 | 1 | 1 | 3 | 76,5 | 16,0 | 60,5 | 12,20 | 3,75 | 8,50 |

*Tableau V*

| Essais | Additif | | | Propriétés statiques des vulcanisats | | | | | | | |
|---|---|---|---|---|---|---|---|---|---|---|---|
| | Silane A 189 (%) | Produit de l'invention | | Dureté Shore A | Module 100% (MPa) | Module 300% (MPa) | Résist. rupt. (MPa) | All. (%) | Déch. Pant. (kg/cm) | Abrasion (DIN perte) | Densité |
| | | (N°) | (%) | | | | | | | | |
| 5 | 0 | – | – | 65 | 1,6 | 3,6 | 20,4 | 713 | 58 | 279 | 1,17 |
| 6 | 3 | – | – | 65 | 2,4 | 6,7 | 24,1 | 653 | 54 | 171 | 1,17 |
| 7 | 0 | 2 | 3 | 69 | 1,8 | 4,3 | 21,6 | – | 64 | 244 | 1,17 |
| 8 | 1 | 2 | 3 | 68 | 2,2 | 6,7 | 24,7 | – | 66 | 224 | 1,17 |
| 9 | 0 | 1 | 3 | 66 | 1,6 | 5,0 | 18,4 | 543 | 62 | 305 | 1,17 |
| 10 | 1 | 1 | 3 | 67 | 2,7 | 10,1 | 23,3 | 515 | 71 | 203 | 1,17 |

*Tableau VI*

| Essais | Additif | | | Propriétés dynamiques des vulcanisats – Flexomètre Goodrich | | | | | | |
|---|---|---|---|---|---|---|---|---|---|---|
| | Silane A 189 (%) | Produit de l'invention | | C.S. (%) | CDO (%) | CDF (%) | △ CD (%) | △ T. Base (° C) | △ T. Cœur (° C) | DP (%) |
| | | (N°) | (%) | | | | | | | |
| 5 | 0 | – | – | 10,0 | 14,0 | 37,0 | 23,0 | 57,5 | 144 | 25 |
| 6 | 3 | – | – | 12,6 | 8,9 | 11,4 | 2,5 | 19,5 | 79,0 | 5,75 |
| 7 | 0 | 2 | 3 | 9,6 | 7,6 | 28,2 | 20,6 | 44 | 134 | 17,5 |
| 8 | 1 | 2 | 3 | 11,0 | 9,25 | 14,45 | 5,2 | 21,5 | 83,0 | 6,65 |
| 9 | 0 | 1 | 3 | 13,4 | 12,8 | 27,0 | 14,2 | 36 | 110 | 16,5 |
| 10 | 1 | 1 | 3 | 12,5 | 8,2 | 12,9 | 4,7 | 20,5 | 80,5 | 5,75 |

*Mise en œuvre*

*Banbury:* 1er temps

- caoutchouc + antioxygène
- Charge (silice + noir de carbone)
- Plastifiant + acide stéarique + PEG 4000 + additif
- Fin du malaxage

*Banbury:* 2e temps (après 24 h)

- Mélange
- Accélérateur + soufre + ZnO
- Fin du malaxage

*Malaxeur ouvert* (température 70/80° C)

- Homogénéisation du mélange et tirage en feuille.

*(Tableaux en pages suivantes)*

*Exemple 4:*

On réalise une série d'essais en mettant en œuvre une formule de composition suivante exprimée en parties en poids:

| | |
|---|---|
| – Caoutchouc naturel SMR 5L | 100,00 |
| – Huile | 15,00 |
| – Acide stéarique | 1,50 |
| – Oxyde de zinc | 4,00 |
| – Antioxygène IPPD | 1,50 |
| – Antioxygène 6PPD | 1,50 |
| – Vulcafor CBS® | 4,00 |
| – Soufre | 1,00 |
| – Noir de carbone | 10,00 |
| – Silice | 50,00 |

Additif No 1: de 0 à 7% en produit actif.

*Mise en œuvre*

*Banbury:* 1er passage

- caoutchouc naturel + antioxygène
- charge + noir de carbone + silice (85%)
- huile + acide stéarique + additif + silice 15%
- fin du malaxage

*Banbury:* 2e passage

- mélange
- accélérateur + soufre + ZnO
- fin du malaxage

*Malaxeur ouvert* (température 60° C)

- reprise du mélange

*Tableau VII*

*Essai au rhéomètre Monsanto à 150° C*

| Essais | Additif (N°) | CM | Cm | △ C. | T. 90 | T + 2 | Indice |
|---|---|---|---|---|---|---|---|
| 11 | – | 75 | 17 | 58 | 12'15''[1] | 5'35'' | 6'40'' |
| 12 | 3 | 71 | 14 | 57 | 11'10'' | 4'50'' | 6'20'' |
| 13 | 4 | 77 | 16,5 | 60,5 | 9'50'' | 4'15'' | 5'35'' |
| 14 | 5 | 71,5 | 13,5 | 58 | 10'15'' | 4'15'' | 6'00'' |
| 15 | 2 | 74 | 16,5 | 57,5 | 10'10'' | 4'10'' | 6'00'' |
| 16 | 1 | 72 | 16,5 | 55,5 | 9'10'' | 3'30'' | 5'40'' |
| 17 | 6 | 72,5 | 16 | 56,5 | 9'10'' | 3'30'' | 5'40'' |
| 18 | 7 | 73 | 16 | 57 | 8'45'' | 3'20'' | 5'25'' |

[1] ' = minute; '' = seconde.

*Tableau VIII*

*Propriétés statiques*

| Essais | Additif (N°) | △ Shore | Mod. 300% (MPa) | R. r. % (MPa) | All. rupt. (%) | Déchir. pantalon (kg/cm) | Abrasion DIN |
|---|---|---|---|---|---|---|---|
| 11 | – | 65 | 5,1 | 23,5 | 734 | 61 | 192 |
| 12 | 3 | 65 | 5,5 | 23 | 660 | 60 | 171 |
| 13 | 4 | 62 | 6,2 | 23,2 | 652 | 59 | 168 |
| 14 | 5 | 64 | 6,3 | 22,6 | 630 | 54 | 176 |
| 15 | 2 | 65 | 5,6 | 23,1 | 681 | 63 | 168 |
| 16 | 1 | 63 | 5,6 | 23,6 | 668 | 63 | 164 |
| 17 | 6 | 64 | 5,6 | 23,9 | 668 | 55 | 165 |
| 18 | 7 | 66 | 6,1 | 23,1 | 636 | 62 | 165 |

*Tableau IX*
*Propriétés dynamiques (flexomètre Goodrich)*

| Essais | Additif (N°) | C.S. (%) | CDO (%) | CDF (%) | △ CD (%) | △ T. Base (° C) | △ T. Cœur (° C) | DP (%) |
|---|---|---|---|---|---|---|---|---|
| 11 | – | 17,0 | 12,6 | 19,8 | + 7,2 | 30 | 94 | 8,05 |
| 12 | 3 | 19,2 | 12,0 | 17,7 | + 5,7 | 23,5 | 84 | 5,20 |
| 13 | 4 | 16,2 | 9,5 | 14,8 | + 5,3 | 24 | 84 | 5,25 |
| 14 | 5 | 16,3 | 11,0 | 15,5 | + 4,5 | 23 | 80 | 4,9 |
| 15 | 2 | 16,0 | 9,5 | 14,6 | + 5,1 | 22,5 | 80,5 | 5,05 |
| 16 | 1 | 17,6 | 10,7 | 15,6 | + 4,9 | 21,5 | 75,5 | 5,85 |
| 17 | 6 | 16,2 | 9,95 | 15,75 | + 5,8 | 22,5 | 79,5 | 5,85 |
| 18 | 7 | 16,3 | 9,5 | 15,25 | + 5,75 | 23 | 77 | 5,55 |

— passage au fin
— tirage en feuille

Les résultats sont rassemblés dans les tableaux suivants:

*Tableau X*
*Essai au rhéomètre Monsanto à 150° C*

| Essais | Additif (N°) | CM | Cm | △ C. | T. 90 | T + 2 | Indice |
|---|---|---|---|---|---|---|---|
| 19 | 0 | 70 | 22 | 43 | 11'40"[1] | 5'50" | 5'50" |
| 20 | 1 | 71 | 28 | 43 | 11'15" | 5'20" | 5'55" |
| 21 | 3 | 67 | 22 | 45 | 8'45" | 4'10" | 4'35" |
| 22 | 7 | 61,5 | 16,5 | 45 | 6'50" | 3'15" | 3'35" |

[1] ' = minute; " = seconde.

*Tableau XI*
*Propriétés statiques des vulcanisats*

| Essais | Additif (N°) | Shore A | Mod. 100% (MPa) | Mod. 300% (MPa) | R. r. % (MPa) | All. rupt. (%) | Déchir. pantalon (kg/cm) | Abrasion DIN |
|---|---|---|---|---|---|---|---|---|
| 19 | 0 | 61 | 1,2 | 5,4 | 22,3 | 684 | 55 | 285 |
| 20 | 1 | 62 | 1,4 | 6,5 | 22,4 | 622 | 63 | 265 |
| 21 | 3 | 60 | 1,4 | 6,3 | 22,5 | 626 | 68 | 256 |
| 22 | 7 | 58 | 1,4 | 6,2 | 23,4 | 633 | 69 | 239 |

*Tableau XII*

*Propriétés dynamiques (flexomètre Goodrich)*

| Essais | Additif (N°) | C.S. (%) | CDO (%) | CDF (%) | CF (%) | △T. Base (°C) | △T. Cœur (°C) | DP (%) |
|---|---|---|---|---|---|---|---|---|
| 19 | 0 | 22,4 | 17,6 | 35,0 | + 17,4 | 57,5 | 141 | 14,2 |
| 20 | 1 | 21,7 | 17,4 | 34,9 | + 17,4 | 56,5 | 129 | 14,2 |
| 21 | 3 | 21,8 | 15,4 | 19,9 | + 4,5 | 24,5 | 79 | 4,2 |
| 22 | 7 | 23,9 | 15,1 | 17,5 | + 2,4 | 19 | 67 | 3,35 |

*Analyse des résultats*

*Résultats rhéométriques*

Tous les mélanges contenant un agent d'interface ont tendance à fixer (T + 2) et à vulcaniser (T90) plus rapidement, voire même beaucoup plus rapidement que le mélange.

*Propriétés statiques*

On observe que les différents agents d'interface testés modifient peu les caractéristiques telles que résistance à la rupture, module ou résistance au déchirement. Les quelques évolutions enregistrées peuvent être considérées comme marginales.

Par contre, la résistance à l'abrasion est améliorée systématiquement de 10 à 15%.

Tous les mélanges comportant un agent d'interface ont leurs caractéristiques dynamiques très améliorées par rapport au mélange N° 11 de référence.

La déformation permanente après essai est ramenée de 8 à 5% en moyenne.

L'échauffement interne est abaissé d'une manière spectaculaire au minimum:

– à la base, d'environ 7° C (30 à 23° C);
– à cœur, de 10° C.

*En conclusion*

On n'observe pas d'effet négatif des différents agents d'interface testés.

– Les propriétés statiques telles que résistance à la rupture, module, résistance au déchirement sont maintenues.
– La résistance à l'abrasion s'améliore dans tous les cas.
– Les propriétés dynamiques, en particulier l'échauffement interne, sont toujours améliorées.

L'effet positif de l'agent d'interface est même spectaculaire.

## Revendications

1. Additif applicable au renforcement des polymères et notamment des élastomères avec les charges minérales, caractérisé par le fait qu'il est obtenu par action d'au moins une polyamine sur au moins un acide monocarboxylique, le rapport polyamine/acide monocarboxylique étant inférieur à 1.

2. Additif selon la revendication 1, caractérisé par le fait que l'acide carboxylique est du groupe de l'acide stéarique, l'acide oléique, linoléique, linolénique, ricinoléique.

3. Additif selon la revendication 1, caractérisé par le fait que l'acide est du groupe des acides versatiques, butanoïque, hexanoïque, heptanoïque, octanoïque, décanoïque, tridécanoïque, hexadécanoïque.

4. Additif selon l'une des revendications 1 à 3, caractérisé par le fait que la polyamine est du groupe des polyalkylénamines dont les radicaux alkylènes linéaires ou ramifiés contiennent de 2 à 13 atomes de carbone.

5. Additif selon l'une des revendications 1 ou 3, caractérisé par le fait que les polyamines sont du groupe des polyoxaalkylénamines dont les radicaux oxaalkylènes linéaires ou ramifiés contiennent 2 ou 3 atomes de carbone.

6. Additif selon l'une des revendications 1 à 3, caractérisé par le fait que les polyamines sont du groupe des amines tertiaires aminoalcoylées de formule générale:

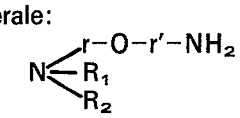

où

r représente un radical éthylène ou propylène,

r' représente un radical triméthylène ou propylène,

$R_1$ représente un radical $-r-O-r'-NH_2$ ou $-r'-NH_2$,

$R_2$ représente un radical $-r-O-r'-NH_2$ ou $-r'-NH_2$ ou alcoyle en $C_2$-$C_4$ ou phényle.

7. Additif selon l'une des revendications 1 à 6, caractérisé par le fait qu'il est apporté sous forme pure.

8. Additif selon la revendication 7, caractérisé par le fait qu'il est apporté prémélangé à un support absorbant.

9. Application d'un additif selon l'une des revendications 1 à 8 au renforcement des caoutchoucs synthétiques simultanément à un silane de formule: $R'-Si(OR)_3$ dans laquelle R' est un groupe organique réactif relié par une courte chaîne alkylène à l'atome de silicium, et OR est un groupe alcoxy hydrolysable.

10. Application d'un additif selon l'une des revendications 1 à 8 au renforcement des caoutchoucs naturels.

## Patentansprüche

1. Additiv, anwendbar für die Verstärkung von Polymeren und insbesondere Elastomeren mit anorganischen Füllstoffen, dadurch gekennzeichnet, dass es durch die Einwirkung mindestens eines Polyamins auf mindestens eine Monocarbonsäure bei einem Verhältnis von Polyamin/Monocarbonsäure unter 1 erhalten worden ist.

2. Additiv nach Anspruch 1, dadurch gekennzeichnet, dass die Carbonsäure zu der Gruppe Stearinsäure, Ölsäure, Linolsäure, Linolensäure und Ricinolsäure gehört.

3. Additiv nach Anspruch 1, dadurch gekennzeichnet, dass die Säure zur Gruppe der Versatic-Säuren, Butansäure, Hexansäure, Heptansäure, Octansäure, Decansäure, Tridecansäure und Hexadecansäure gehört.

4. Additiv nach einem der Ansprüche 1 bis 3, dadurch gekennzeichnet, dass das Polyamin zur Gruppe der Polyalkylenamine gehört, deren lineare oder verzweigte Alkylengruppen 2 bis 12 Kohlenstoffatome enthalten.

5. Additiv nach einem der Ansprüche 1 oder 3, dadurch gekennzeichnet, dass die Polyamine zur Gruppe der Polyoxaalkylenamine gehören, deren lineare oder verzweigte Oxaalkylengruppen 2 bis 3 Kohlenstoffatome enthalten.

6. Additiv nach einem der Ansprüche 1 bis 3, dadurch gekennzeichnet, dass die Polyamine zur Gruppe der tertiären aminoalkylierten Amine der allgemeinen Formel

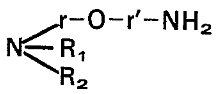

gehören, in der

r eine Ethylen- oder Propylengruppe ist,

r' eine Trimethylen- oder Propylengruppe ist,

$R_1$ eine Gruppe $-r-O-r'-NH_2$ oder $-r'-NH_2$ bedeutet und

$R_2$ eine Gruppe $-r-O-r'-NH_2$ oder $-r'-NH_2$ oder eine $C_2$-$C_4$-Alkyl- oder Phenylgruppe ist.

7. Additiv nach einem der Ansprüche 1 bis 6, dadurch gekennzeichnet, dass es in reiner Form zur Verfügung gestellt wird.

8. Additiv nach Anspruch 7, dadurch gekennzeichnet, dass es in Form eines Vorgemisches mit einem absorbierenden Träger zur Verfügung gestellt wird.

9. Anwendung eines Additivs nach einem der Ansprüche 1 bis 8 zum Verstärken von synthetischen Kautschuken gleichzeitig mit einem Silan der Formel $R'-Si(OR)_3$, in der R' eine reaktionsfähige organische Gruppe ist, die durch eine kurze Alkylenkette an das Siliciumatom gebunden ist, und OR eine hydrolysierbare Alkoxygruppe bedeutet.

10. Anwendung eines Additivs nach einem der Ansprüche 1 bis 8 zum Verstärken von Naturkautschuk.

## Claims

1. An additive which is applicable to the reinforcement of polymers and in particular elastomers with mineral fillers, characterised in that it is produced by the action of at least one polyamine on at least one mono-carboxylic acid, the polyamine/mono-carboxylic acid ratio being lower than 1.

2. An additive according to Claim 1, characterised in that the carboxylic acid is from the group comprising stearic acid, oleic acid, linoleic acid, linolenic acid, and ricinoleic acid.

3. An additive according to Claim 1, characterised in that the acid is from the group comprising versatic, butanoic, hexanoic, heptanoic, octanoic, decanoic, tridecanoic and hexadecanoic acids.

4. An additive according to one of Claims 1 to 3, characterised in that the polyamine is from the groupe comprising polyalkylene amines wherein the branched or straight chain alkylene radicals contain from 2 to 12 carbon atoms.

5. An additive according to one of Claims 1 or 3, characterised in that the polyamines are from the group comprising polyoxaalkylene amines wherein the branched or straight chain oxaalkylene radicals contain from 2 to 3 carbon atoms.

6. An additive according to one of Claims 1 to 3, characterised in that the polyamines are from the group of amino alkylated tertiary amines having the general formula:

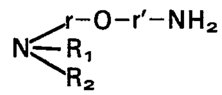

wherein

r represents an ethylene or propylene radical,

r' represents a trimethylene or propylene radical,

$R_1$ represents an $-r-O-r'-NH_2$ radical or $-r'-NH_2$,

$R_2$ represents an $-r-O-r'-NH_2$ radical or $-r'-NH_2$ or $C_2$-$C_4$ alkyl or phenyl.

7. An additive according to one of Claims 1 to 6, characterised in that it is added in pure form.

8. An additive according to Claim 7, characterised in that it is added in the condition of being premixed with an absorbent carrier.

9. Use of an additive according to one of Claims 1 to 8 for the reinforcement of synthetic rubbers simultaneously with a silane having the formula: $R'-Si(OR)_3$, wherein R' is a reactive organic group connected by a short alkylene chain to the silicon atom, and OR is a hydrolysable alkoxy group.

10. Use of an additive according to one of Claims 1 to 8 for the reinforcement of natural rubbers.